Europäisches Patentamt

European Patent Office

Office européen des brevets

(19)

(11) Veröffentlichungsnummer: **0 439 140 A1**

## (12) EUROPÄISCHE PATENTANMELDUNG

(21) Anmeldenummer: **91100825.8**

(22) Anmeldetag: **23.01.91**

(51) Int. Cl.⁵: **C05F 17/02, B65F 1/14**

(30) Priorität: **25.01.90 DE 4002174**

(43) Veröffentlichungstag der Anmeldung:
**31.07.91 Patentblatt 91/31**

(84) Benannte Vertragsstaaten:
**AT BE CH DK ES FR GB GR IT LI LU NL SE**

(71) Anmelder: **Gebrüder OTTO KG.**
**Siegener Strasse 69**
**W-5910 Kreuztal(DE)**

(72) Erfinder: **Otto, Werner**
**Forstweg 2**
**W-5910 Kreuztal(DE)**

(74) Vertreter: **Staeger, Sigurd, Dipl.-Ing.**
**Patentanwälte Dipl.-Ing. S. Staeger Dipl.-Ing.**
**Dipl.-Wirtsch.-Ing. R. Sperling Müllerstrasse**
**31**
**W-8000 München 5(DE)**

(54) **Müllgefäss zur Aufnahme von zu kompostierenden Abfällen.**

(57) Bei einem Müllgefäß zur Aufnahme von zu kompostierenden Abfällen mit einem Siebeinsatz und Lüftungsöffnungen in dessen Wänden ist der Siebeinsatz plattenförmig ausgebildet und im Abstand vom Boden des Gefäßes an den Wänden des letzteren lösbar arretiert.

FIG. 3

EP 0 439 140 A1

# MÜLLGEFÄSS ZUR AUFNAHME VON ZU KOMPOSTIERENDEN ABFÄLLEN

Die Erfindung bezieht sich auf ein Müllgefäß zur Aufnahme von zu kompostierenden Abfällen mit einem Siebeinsatz und Lüftungsöffnungen in dessen Wänden.

Aus der DE-PS 35 17 262 ist ein derartiges Müllgefäß bekannt. Bei diesem Müllgefäß findet ein korbartiger Siebeinsatz Verwendung, der sich vom Deckelrand bis in die Nähe des Rumpfbodens erstreckt. Die bekannterweise besonders robuste Behandlung von Müllgefäßen bei der Schüttung hat zu Schwierigkeiten bei Verwendung dieses korbförmigen Siebeinsatzes geführt, einerseits deshalb, weil der Rand des Siebeinsatzes auf der Höhe des Deckelrandes verläuft und andererseits deshalb, weil der korbförmige Siebeinsatz bei der Schüttung beschädigt wurde.

Der Erfindung liegt die Aufgabe zugrunde, ein Müllgefäß der eingangs erwähnten Art zu schaffen, das besonders einfach hergestellt werden kann und bei dem der Siebeinsatz eine hohe Stabilität aufweist.

Die Aufgabe wird dadurch gelöst, daß erfindungsgemäß der Siebeinsatz plattenförmig ausgebildet und im Abstand vom Boden des Gefäßes an den Wänden des letzteren lösbar arretiert ist.

Auf der einen Seite hat sich erwiesen, daß die Verwendung eines plattenförmigen Siebeinsatzes - selbstverständlich bei der Anordnung von Lüftungsöffnungen im Rumpfteil - eine ausreichende Belüftung des zu kompostierenden Materials gewährleistet. Auf der anderen Seite jedoch treten bei der Schüttung keine Schwierigkeiten auf, weil der Siebeinsatz besonders stabil ausgebildet ist.

Nach einer bevorzugten Ausführungsform der Erfindung ist der Siebeinsatz in/an Halterungen an der Innenseite des Rumpfes arretiert. Die Halterungen können aus in Rumpflängsrichtung verlaufenden Rippen mit Auflageflächen und/oder Einschnitten zum Lagern des Siebeinsatzes bestehen. Um die Stabilität des Siebeinsatzes zu erhöhen, kann er durch an seiner bodenzugekehrten Seite vorgesehenen Stegen verstärkt sein; diese Stege können rumpfparallel verlaufen.

Zur besonders einfachen Handhabung beim Einstzen oder Herausnehmen des Siebeinsatzes kann er an einem Rand eine Aussparung und am gegenüberliegenden Rand eine Haltevorrichtung aufweisen; diese Haltevorrichtung besteht zweckmäßigerweise aus einer Schraube o.dgl., welche einer unterhalb des Siebeinsatzes vorgesehenen Aufnahme zugeordnet ist; der aus dem Rumpf herausragende Kopf der Schraube kann mit einer Ränderlung versehen sein. Auf diese Weise ist es möglich, die Schraube mit der Hand zu betätigen.

Auf der Zeichnung ist eine beispielsweise Ausführungsform der Erfindung dargestellt; sie wird nachfolgend näher beschrieben. Es zeigt:

Fig. 1  eine teilweise Seitenansicht - teilweise weggebrochen - auf eine Ausführungsform der Erfindung,

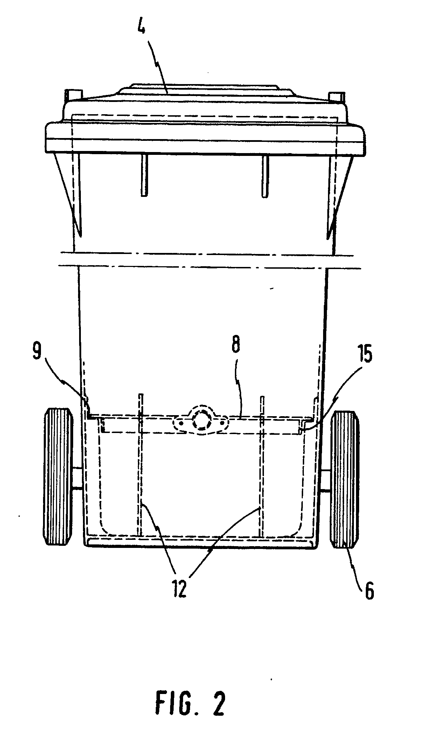

Fig. 2  eine Stirnansicht auf die gleiche Ausführungsform und

Fig. 3  einen Schnitt gemäß Linie 3-3 in Fig. 1.

Als Müllgefäß kann ein Standardbehälter, z.B. für 120 oder 240 l Verwendung finden. Das Müllgefäß kann auch in bekannter Weise mit zwei Rädern versehen sein; es soll so gestaltet sein, daß es mit üblichen Müllfahrzeugen abgefahren wird bzw. auch mit den bekannten Schüttvorrichtungen entleerbar ist.

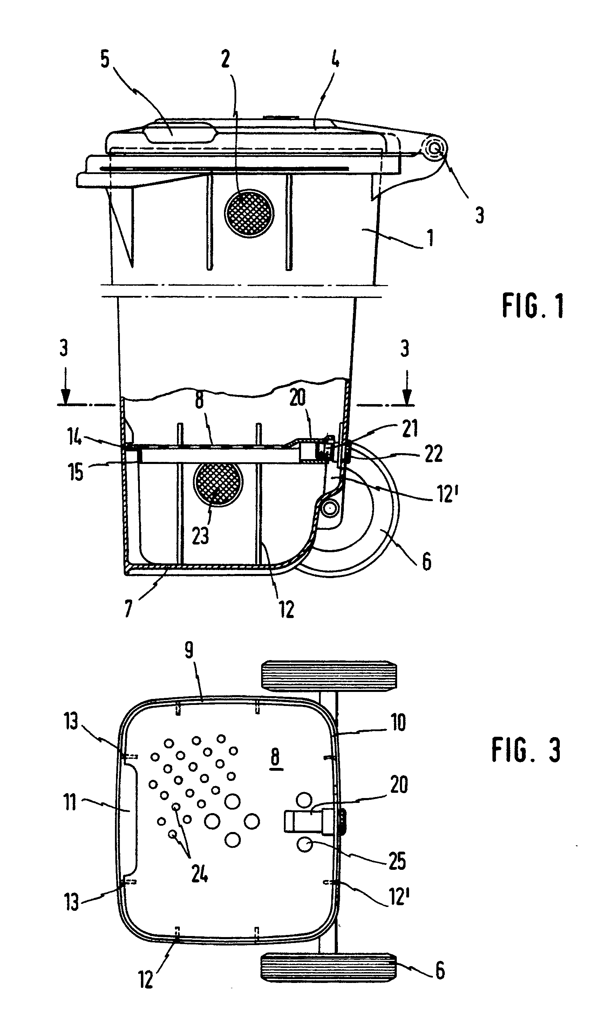

Ein Müllgefäß, z.B. mit einem Fassungsvermögen von 240 l, ist als Ausführungsbeispiel dargestellt, wobei im Rumpfteil 1 sich gegenüberliegend zwei Lüftungsöffnungen 2 vorgesehen sind. Der Rumpfteil weist Scharniere 3 und einen Deckel 4 mit Handhabungen 5 auf. Die Lüftungsöffnungen 2 sind durch ein engmaschiges Netz, z.B. gegen den Zutritt von Insekten, abgesichert. Im unteren Teil des Müllgefäßes, welches mit zwei Rädern 6 versehen ist, ist im Abstand vom Rumpfboden 7 ein Siebeinsatz 8 vorgesehen. Dieser Siebeinsatz 8 weist Umrisse auf, die dem Querschnitt des Rumpfteils - wie aus Fig. 3 ersichtlich ist - im wesentlichen entsprechen. Es ist jedoch ein Abstand 9 im wesentlichen von 1 - 2 cm zwischen dem Rand 10 des Siebeinsatzes und der Rumpfinnenseite vorgesehen. Auf der scharnierabgekehrten Seite weist der Siebeinstz eine Aussparung 11 auf, die zur leichteren Handhabung bzw. zum Untergreifen mit der Hand dient. An der Rumpfinnenseite sind Längsrippen 12 vorgesehen, welche bis zur Unterseite des Siebeinsatzes 8 eine wesentlich größere Breite aufweisen als auf der Höhe des Siebeinsatzes bzw. oberhalb desselben. In diesem Bereich haben die Rippen lediglich die Stärke des Luftspaltes 9, so daß diese als Auflage für den Siebeinsatz an den Seitenwänden und an der Rückwand des Rumpfteiles dienen; die Rippen 12' an der Innenseite der Rückwand des Rumpfteiles haben - wie aus Fig. 1 ersichtlich - eine wesentlich geringere Länge als die Rippen 12.

Die Rippen 13 an der Stirnseite des Rumpfteiles sind jedoch nicht als Auflage für den Siebeinsatz ausgebildet, sondern weisen Einschnitte 14 auf, welche den Siebeinsatz 8 gegen Herausfallen sichern. Der Siebeinsatz ist an seiner Unterseite mit einem Verstärkungsrand 15 versehen, welcher randparallel die gesamte Innenseite des Siebeinsatzes 8 abstützt. Dieser Steg 15 verläuft in einem Abstand vom Rand 10 des Siebeinsatzes 8, der die Auflage auf den Längsrippen 12 bzw. 12' berücksichtigt. Der Rand 10 des Siebeinsatzes 8 ist an der der Rückwand zugekehrten Seite mit einer rohrförmigen Ausbauchung oder Aufnahme 20 versehen, in welcher ein Gewinde vorgesehen ist. In dieses Gewinde ist eine Schraube 21 einschraubbar, die an ihrem Kopf 22 mit einer Rändelung für eine leichtere Handhabung versehen ist.

Unterhalb des Siebeinsatzes sind ebenfalls Lüftungsöffnungen 23 mit einem engmaschigen Netz versehen vorgesehen, so daß eine Luftzirkulation vom Bodenbereich über die Löcher 24 bzw. 25 im Siebeinsatz zu den Lüftungsöffnungen 2 im Deckelbereich gewährleistet ist.

Es ist noch zu erwähnen, daß das zu kompostierende Material meistens so "luftig" ist, daß die vorgesehenen Belüftungsmöglichkeiten einen ausreichenden Zutritt für den Sauerstoff gewährleisten. Gegebenenfalls kann im Boden noch eine Flüssigkeitsaustrittsöffnung vorgesehen werden.

Bei der dargestellten Ausführungsform liegt der Siebeinsatz auf der Höhe des obersten Punktes der Räder 6.

**Patentansprüche**

1. Müllgefäß zur Aufnahme von zu kompostierenden Abfällen mit einem Siebeinsatz und Lüftungsöffnungen in dessen Wänden, dadurch gekennzeichnet, dßa der Siebeinsatz (8) plattenförmig ausgebildet und im Abstand vom Boden (7) des Gefäßes an den Wänden des letzteren lösbar arretiert ist.

2. Müllgefäß nach Anspruch 1, dadurch gekennzeichnet, daß der Siebeinsatz (8) in/an Halterungen (12) an der Innenseite des Rumpfes (1) arretiert ist.

3. Müllgefäß nach Anspruch 1 oder 2, dadurch gekennzeichnet, dßa die Halterungen aus in Rumpflängsrichtung verlaufenden Rippen (12) mit Auflageflächen und/oder Einschnitten zum Lagern des Siebeinsatzes (8) bestehen.

4. Müllgefäß nach einem oder mehreren der Ansprüche 1 bis 3, dadurch gekennzeichnet, daß der Siebeinsatz (8) durch an seiner bodenzugekehrten Seite vorgesehenen Stegen (15) verstärkt ist.

5. Müllgefäß nach Anspruch 4, dadurch gekennzeichnet, daß die Stege (15) rumpfparallel verlaufen.

6. Müllgefäßt nach einem oder mehreren der Ansprüche 1 bis 5, dadurch gekennzeichnet, daß der Siebeinsatz (8) an einem Rand eine Aussparung (11) und am gegenüberliegenden Rand eine Haltevorrichtung aufweist.

7. Müllgefäß nach Anspruch 6, dadurch gekennzeichnet, daß die Haltevorrichtung aus einer Schraube (21) o.dgl. besteht, welche einer unterhalb des Siebeinsatzes (8) vorgesehenen Aufnahme (20) zugepaßt ist.

8. Müllgefäß nach Anspruch 7, dadurch gekennzeichnet, daß der aus dem Rumpf (1) herausragende Kopf (22) der Schraube (21) mit einer Rändelung versehen ist.

FIG. 1

FIG. 3

4

FIG. 2

**Europäisches
Patentamt**

**EUROPÄISCHER
RECHERCHENBERICHT**

Nummer der Anmeldung

**EP 91 10 0825**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 271 719  (SCHÄFER)<br>* Ansprüche 1-10 *<br>– – – | 1-6 | C 05 F 17/02<br>B 65 F 1/14 |
| P,A | EP-A-0 374 360  (ACHTERBERG)<br>* Anspruch 1; Figure 1,3 *<br>– – – | 1-8 | |
| P,A | EP-A-0 386 568  (SCHÄFER)<br>* Anspruch 1; Figuren 1,2 *<br>– – – – – | 1-8 | |

RECHERCHIERTE
SACHGEBIETE (Int. Cl.5)

C 05 F
B 65 F

Der vorliegende Recherchenbericht wurde für alle Patentansprüche erstellt

| Recherchenort | Abschlußdatum der Recherche | Prüfer |
|---|---|---|
| Den Haag | 21 März 91 | RODRIGUEZ FONTAO M-B |